Europäisches Patentamt

European Patent Office

Office européen des brevets

(11) Veröffentlichungsnummer: **0 432 444 B1**

# EUROPÄISCHE PATENTSCHRIFT

(45) Veröffentlichungstag der Patentschrift: **21.09.94**

(21) Anmeldenummer: **90121167.2**

(22) Anmeldetag: **06.11.90**

(51) Int. Cl.5: **C08G 18/00**, C08G 18/58, C08G 18/04, C08G 59/40, H01B 3/30, //(C08G18/00, 101:00)

(54) **Verfahren zur Herstellung hochtemperaturbeständiger Schaum- stoffe.**

(30) Priorität: **16.11.89 DE 3938062**

(43) Veröffentlichungstag der Anmeldung:
**19.06.91 Patentblatt 91/25**

(45) Bekanntmachung des Hinweises auf die Patenterteilung:
**21.09.94 Patentblatt 94/38**

(84) Benannte Vertragsstaaten:
**BE CH DE FR GB IT LI NL**

(56) Entgegenhaltungen:
**EP-A- 0 272 563**
**EP-A- 0 331 996**
**FR-A- 2 156 100**
**US-A- 4 699 931**

(73) Patentinhaber: **BAYER AG**

**D-51368 Leverkusen (DE)**

(72) Erfinder: **Müller, Hanns-Peter, Dr.**
**Weizenfeld 36**
**W-5060 Bergisch-Gladbach 2 (DE)**
Erfinder: **Franke, Joachim, Dr.**
**An der Ruthen 2**
**W-5000 Köln 80 (DE)**
Erfinder: **Gruttmann, Horst**
**Jakob-Kaiser-Strasse 3**
**W-5090 Leverkusen 1 (DE)**
Erfinder: **Jacob, Hans Dieter**
**Burscheider Strasse 223**
**W-5090 Leverkusen 3 (DE)**

**Beschreibung**

Die vorliegende Erfindung betrifft ein Verfahren zur Herstellung hochtemperaturbeständiger Schaumstoffe durch Umsetzung von Reaktionsgemischen (= A-Zustand) aus organischen Polyisocyanaten, organischen Polyepoxiden, speziellen Katalysatoren und Stoppern zu einem intermediären lagerstabilen höherviskosen B-Zustand und der Umsetzung dieses höherviskosen B-Zustandes durch Zugabe von chemischen und/oder physikalischen Treibmitteln und einem die Isocyanat/Epoxid-Reaktion spontan beschleunigenden Katalysator ohne Wärmezufuhr in den endgültigen geschäumten nicht mehr schmelzbaren C-Zustand.

Gemäß EP-A-0272 563 gelingt die zweistufige Herstellung von Formkörpern durch Umsetzung eines lagerstabilen B-Zustandes durch Zugabe von latenten, durch Wärme aktivierbaren Katalysatoren. In dieser Veröffentlichung befindet sich ein Hinweis, daß es denkbar wäre, die im "B-Zustand" befindlichen Harze in Kombination mit geeigneten Treibmitteln zur Herstellung von Schaumstoffen zu verwenden. Es befindet sich aber kein Hinweis darauf, in welcher Form die Verschäumung vorgenommen werden soll, und insbesondere müssen die Harze gemäß EP 0272 563 unter weiterer Wärmezuführung in den endgültigen vernetzten Zustand überführt werden.

Aus EP-A 0296 052 geht hervor, daß man hochtemperaturbeständige Schaumstoffe aus Mischungen von Diisocyanaten und Bisepoxiden in Gegenwart von porösen, expandierten oder dispergierten Materialien erhalten kann. Ohne den Zusatz von porösen Partikeln lassen sich die angegebenen Ausgangsmischungen nicht zu einem Schaumstoff verarbeiten`

Nach EP 0 331 996 können lagerslabile Isocyanat-Epoxid-Gemische hergestellt werden. Diese Reaktionsharzmischungen sind geeignet für eine Verwendung als Elektroisolierstoffe, Schaumstoffe hoher Warmeformbeständigkeit, Lackbindemittel, Klebstoffrohstoffe und Matrixmaterial für Konstruktionswerkstoffe.

In US 4,699,931 wird die Herstellung von Oxazolidinonstrukturen enthalten Isocyanuratschäumen durch Reaktion von Polyisocyanaten mit Polyepoxiden unter Mitverwendung von Katalysatoren, Treibmitteln und oberflächenaktiven Substanzen beschrieben.

Der Erfindung liegt die Aufgabe zugrunde, hochtemperaturbeständige Schaumstoffe zur Verfügung zu stellen, die in einfacher Verfahrensweise herstellbar sind und ohne zusätzliche Wärmezufuhr harten, so daß sie in einer industriellen Fertigung in kurzen Formbelegungszeiten produziert werden können.

Die Erfindung betrifft ein Verfahren zur Herstellung hochtemperaturbeständiger Schaumstoffe durch Umsetzung von

a) mindestens einem organischen Polyisocyanat mit

b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht in Gegenwart

c) eines tertiären Amins als Katalysator zu einem Oxazolidinon- und/oder Isocyanuratgruppen aufweisenden Zwischenprodukt, und Abbruch der Reaktion bei einer Umsetzung bis 60 %, insbesondere 10 % bis 30 % der im Ausgangsgemisch vorliegenden Isocyanatgruppen durch Zugabe einer der Aminmenge c) mindestens äquivalenten Menge

d) eines alkylierend wirkenden Sulfonsäurealkylesters, von Methyljodid oder von Dimethylsulfat, so daß ein intermediärer stabiler B-Zustand des Viskositätsbereichs von 1.500 bis 20.000 mPas bei 25°C erhalten wird, und

e) gegebenenfalls in Gegenwart weiterer an sich bekannter Hilfs- und Zusatzstoffe dadurch gekennzeichnet, daß dieser B-Zustand durch Zugabe von chemischen und/oder physikalischen Treibmitteln T) und einem die Isocyanat/Epoxid Reaktion beschleunigenden Katalysator f) ohne Wärmezufuhr unter gleichzeitigem Aufschäumen in den endgültigen geschäumten Zustand überführt wird.

Gegenstand der Erfindung ist auch ein Verfahren zur Herstellung von hochtemperaturbeständigen Schaumstoffen, dadurch gekennzeichnet, daß man als chemische Treibmittel T) Wasser und/oder Pholinoxid und als physikalische Treibmittel T) leicht siedende inerte organische Flüssigkeiten und als Katalysatoren tert. Amine, besonders bevorzugt Pentamethyl-diethylentriamin verwendet. Es war äußerst überraschend und für Fachleute nicht vorhersehbar, daß nach der erfindungsgemäßen Verfahrensweise hochtemperaturbeständige Schaumstoffe zu erhalten sind obwohl die verschiedensten Treibmittel verwendet werden können.

In einer bevorzugten Ausführungsform betrifft die Erfindung ein Verfahren zur Herstellung von hochtemperaturbeständigen Schaumstoffen dadurch gekennzeichnet, daß man als Hilfs- und Zusatzmittel Schaumstoffstabilisatoren, Trennmittel und Farbstoffe in einer maximalen Menge von bis zu 10 Gew.-% bezogen auf das Gesamtgewicht der Komponenten a) und b) und anorganische und/oder organische Füllstoffe, olefinisch ungesättigte Verbindungen, insbesondere Styrol und/oder Maleinimidderivate und/oder mindestens zwei alkoholische Hydroxylgruppen aufweisende organische Verbindungen des Molekulargewichtsbereichs 62 bis

EP 0 432 444 B1

8.000 in einer maximalen Menge von bis zu 100 Gew.-% bezogen auf das Gesamtgewicht der Komponenten a) und b) verwendet.

Bei der Ausgangskomponente a) handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel $Q(NCO)_n$,

in der

n =   2-4, vorzugsweise 2,

und

Q   einen aliphatischen Kohlenwasserstoffrest mit 2-18, vorzugsweise 6-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren. 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4-und/oder -4,4'-diisocyanat, Naphthylen-1,4-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten werden (GB 874 430 und GB 848 671), m und p-Isocyanatophenylsulfonyl-isocyanate(US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren-und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben dieser 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetztende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin-Formaldehyd-Kondensation entsteht. Das ebenfalls besonders bevorzugt geeignete, hoherkernige Polyiocyanate enthaltende Gemisch kann beispielsweise durch Rückvermischen des zuletzt genannten Destillationsproduktes mit an 4,4'-Diisocyanatodiphenylmethanverarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden, Auch in der DE-OS 1 937 685 sowie in der US-PS 3 362 979 werden Wege zu derartigen Polyisocyanatgemischen gewiesen. Auch in den besonders bevorzugt geeigneten Polyisocyanatgemischen, welche hoherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Komponente b) handelt es sich um beliebige, mindestens zwei Epoxidgruppen, d.h. 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)-methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäuranhydrids und 1/2 Mol eines Diols bzw. 1/n Mol eines Polyols mit n-Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykol können ebenfalls verwendet werden. Von weiterem Interesse sind Triglycidylisocyanaurat, N,N'-Diepoxypropyloxyamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten. Epoxidierungsprodukte von Di- und Polyolefinen, wie Butadien, Vinylcyclohexan, 1,5-Cyclooctadien, 1,5,9-Cyclododecatrien, Polyerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten.

Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-amino-phenylglycidyl-ether; Polyglycidylester aus cycloaliphatischen Dicarbonsäuren, insbesondere Hexahydrophthalsäurediglycidylester und Polyepoxide aus dem Umsetzungsprodukt von n Holen, Hexahydrophthalsäureanhydrid und 1 Mol eines Polyols mit n-Hydroxylgruppen (n = ganze Zahl von 2-6), insbesondere 3 Mol Hexahydrophthalsäuranhydrid und einem Mol 1,1,1-Trimethylolpropan, 3,4-Epoxycyclohexylmethan-3,4-epoxycyclohexancarbonxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, vorzugsweise 3:1 bis 65:1 und insbesondere 5:1 bis 30:1, entspricht.

Bei der Katalystorkomponente c) handelt es sich um beliebige mono- oder polyfunktionelle organische Amine mit tertiären Aminogruppen. Geeignete Amine der genannten Art weisen im allgemeinen ein Molekulargewicht von bis zu 353, vorzugsweise von 101 bis 185 auf. Bevorzugt sind solche tertiäre Amine, die bei der Reaktionstemperatur der ersten Reaktionsstufe flüssig sind. Typische Beispiele geeigneter bzw. bevorzugt geeigneter Amine sind Triethylamin, Tri-n-butylamin, Dimethylcyclohexylamin, N,N,N',N'-Tetramethylethylendiamin, N,N-Dimethyl-benzylamin, Triethylendiamin oder Dimethyloctylamin, N-Methylmorpholin und Bis-(N,N-dimethylaminoethyl)-ether.

Zu den geeigneten Aminen zählen auch solche, die neben der Katalysewirkung auch eine Treibwirkung besitzen. In diesem Falle ist die Katalysatorkomponente C gleichzeitig das Treibmittel T.

Die Katalysatoren c) werden in einer Menge von 0,01 bis 2, vorzugsweise 0,01 bis 0,1 Gew.-%, bezogen auf das Gesamtgewicht der Komponente a) und b), eingesetzt.

Bei den Stoppern d) handelt es sich um Katalysatorengifte für die Katalysatoren c). Geeignet sind beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester wie n-Butansulfonsäuremethylester, n-Perfluorbutansulfonsäuremethylester oder n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester. Die genannten aromatischen Sulfonsäureester sind bevorzugt. Besonders bevorzugt wird p-Toluolsulfonsäuremethylester als Komponente d) verwendet. Ebenfalls geeignet jedoch weniger bevorzugt sind Methyljodid und Dimethylsulfat als Komponente d).

Die Komponente d) wird mindestens in einer solchen Menge verwendet, die den tert.-Aminstickstoffatomen der Komponente c) äquivalent ist.

Als chemische Treibmittel T) kommen erfindungsgemäß Wasser und/oder Phospholinoxid in Frage. Als physikalische Treibmittel T) werden Kohlenwasserstoffe wie Pentan, Butan, Hexan oder Fluor-chlor-Kohlenwasserstoffe eingesetzt.

Erfindungsgemäß bevorzugte Katalysatoren f) sind neben den unter c) beschriebenen tert.-Aminen beliebige Gemische der beispielhaft genannten Verbindungen und besonders bevorzugt, ein Gemisch aus gleichen Gew.-Teilen Pentamethyl-diethylentriamin, N-Methyl-N'-dimethylaminoethyl-piperazin, N,N-Diethyl-ethanolamin und Silamorpholin.

Bevorzugte Hilfs- und Zusatzmitteln e) sind die bekannten Schaumstoffstabilisatoren vom Typ der Polyethersiloxane, Formtrennmittel z.B. Polyamidwachse und/oder Stearinsäurederivate und/oder natürliche Wachse z.B. Carnaubawachs.

Bei den gegebenenfalls mitzuverwendenden Hilfs- und Zusatzmitteln e) handelt es sich beispielsweise e1) um polymerisierbare, olefinisch ungesättigte Monomere, die in Mengen von bis zu 100 Gew.-%, vorzugsweise bis zu 50 Gew.-%, bezogen auf das Gesamtgewicht der Komponenten a) und b) zum Einsatz gelangen können.

Typische Beispiele von Zusatzmitteln e1) sind olefinisch ungesättigte Monomere, die keine gegenüber NCO-Gruppen reaktive Wasserstoffatome aufweisen, wie z.B. Diisobutylen, Styrol, $C_1$-$C_4$-Alkylstyrole, wie $\alpha$-Methylstyrol, $\alpha$-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet, vorausgesetzt, die Zusatzmittel e1) werden überhaupt eingesetzt.

Bei Mitverwendung von Zusatzmitteln e1) ist die Mitverwendung von klassischen Polymerisationsinitiatoren wie z.B. Benzoylperoxid möglich, im allgemeinen jedoch nicht erforderlich.

Weitere, gegebenenfalls mitzuverwendende Hilfs- und Zusatzmittel e) sind e2) mindestens 2, insbesondere 2 bis 8 und vorzugsweise 2 bis 3 alkoholische Hydroxylgruppen aufweisende organische Verbindungen des Molekulargewichtsbereichs 62 bis 8000, wie sie als Aufbaukomponente für Polyurethan an sich bekannt sind, Beispiele sind einfache mehrwertige Alkohole wie Ethylenglykol, Hexadiol-1,6, Glycerin oder Trimethylpropan, Dimethylsiloxan-Einheiten aufweisende Polyole, z,B, Bis-(dimethylhydroxymethyl-silyl)-ether; Estergruppen aufweisende Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasichen Carbonsäuren bzw, deren Anhydride wie z.B. Adipinsäure, Phthalsäure oder Phthalsäureanhydrid zugänglich sind oder Polyhydroxylpolyether wie sie durch Anlagerung von Alkylenoxiden wie Propylenoxid und/oder Ethylenoxid an geeignete Startermoleküle wie z.B, Wasser, die soeben genannten einfachen Alkohole oder auch Amine mit mindestens zwei aminischen NH-Bindungen zugänglich sind.

Die Zusatzmittel e2) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen der Komponente e2), von mindestens 2 : 1, vorzugsweise mindestens 2,5 : 1 entspricht. In jedem Fall muß die Menge der Komponente a) so bemessen sein, daß das Äquivalentverhältnis von Isocyanatgruppen der Komponente a) zur Summe der Epoxidgruppen der Komponente b), Hydroxylgruppen der Komponente e2) und den gegebenenfalls in der Komponente b) vorliegenden Hydroxylgruppen mindestens bei 1,2:1, besonders bevorzugt bei 4:1 bis 30:1 liegt.

Die Mitverwendung von Hilfs- und Zusatzmitteln e1)bzw. e2) ist im allgemeinen nicht erforderlich. Die unter e1) beispielhaft genannten Zusatzmittel sind im übrigen gegenüber den unter e2) beispielhaft genannten Verbindungen bevorzugt. Grundsätzlich ist es auch möglich, gleichzeitig beide Arten von Hilfs- und Zusatzmitteln mitzuverwenden.

Weitere gegebenenfalls mitzuverwendende Hilfs- und Zusatzmitteln e) sind beispielsweise e3) Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z,B. Dioctylphthalat, Tributyl- oder Triphenylphosphat, Flammschutz verbessernde Substanzen wie Exolith oder Magnesiumoxid, lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "liquid cristal").

Weitere gegebenenfalls mitzuverwendende Hilfs- und Zusatzmittel e) sind beispielsweise e4) olefinisch ungesättigte Monomere mit gegenüber NCO-Gruppen reaktiven Wasserstoffatomen wie z.B. Hydroxyethyl-methacrylat, Hydroxypropyl-methacrylat und Aminoethylmethacrylat.

Die Hilfs- und Zusatzmittel können sowohl den Ausgangsmaterialien a) und b) vor der Durchführung des erfindungsgemäßen Verfahrens einverleibt oder auch erst später mit dem in der Zwischenstufe vorliegenden Harz zugemischt werden.

Zur Durchführung des erfindungsgemäßen Verfahrens werden die Ausgangsmaterialien a) bis c) und gegebenenfalls die Hilfs- und Zusatzmittel e) bzw. ein Teil hiervon miteinander vermischt und innerhalb des Temperaturbereichs von 20 bis 150°C, vorzugsweise 60 bis 130°C, zur Reaktion gebracht. Nach einem Umsatz von maximal 60 %, vorzugsweise von 15 bis 30 % der in das Ausgangsgemisch über die Komponente a) eingebrachten Isocyanatgruppen wird die Reaktion durch Zugabe des Stoppers d) abgebrochen.

Das hierbei anfallende, Zwischenprodukt stellt bei Raumtemperatur einen flüssigen "B-Zustand" dar und kann, gegebenenfalls nach beliebig langer Zwischenlagerung der zweiten Stufe des erfindungsgemäßen Verfahrens zugeführt werden.

Hierzu werden dem Zwischenprodukt der Katalysator, die verwendeten Treibmittel und gegebenenfalls weitere Hilfs- und Zusatzmittel zugesetzt, das Ganze innig vermischt und das schaumfähige Gemisch in eine offene oder geschlossene Form eingegossen.

Nach einer Liegezeit von 1 bis 2 min, beginnt im allgemeinen der Treibvorgang, der in der Regel nach 3-6 min beendet ist. Die erhaltenen Schaumstoffe sind nach insgesamt 6-12 min klebfrei, Die Poren sind feinteilig und gleichmäßig.

Zwecks Erreichens optimaler Eigenschaften ist es oftmals angezeigt, die resultierenden Kunststoffe bei Temperaturen zwischen 120° und 250°C nachzuhärten.

Das erfindungsgemäße Verfahren kann z,B, als Füllschaum zur Elektroisolierung, zur Herstellung von Konstruktionsmaterialien für den Fahrzeug- und Flugzeugbau, zur Herstellung von Dämmplatten zur Verwendung im Motorräumen und zur Herstellung von Schleifscheiben herangezogen werden.

Die nach dem erfindungsgemäßen Verfahren hergestellten Schaumstoffe sind schwer entflammbar und besitzen niedrige dielektrische Verluste, die Feuchtebeständigkeit und Abriebfestigkeit sowie die Verarbeitbarkeit in Formen sind hervorragend. Die erfindungsgemäßen schaumfähigen Mischungen können aber auch zum Verkleben der verschiedenen Substrate z.B. von Stahl-, Kupferblechen von Kunststoffplatten z.B.

Polybutylenterephthalat verwendet werden.

In den nachfolgenden Beispielen beziehen sich alle Prozente auf Gewichtsprozente.

Beispiel 1

800 Gew.-Teile eines Gemisches aus 60 % 2,4′-Diisocyanatodiphenylmethan und 40 % 4,4′-Diisocyanatodiphenylmethan (NCO-Gehalt = 33,6 %) werden bei 50°C mit 200 Gew.-Teilen des Diglycidylethers von Bisphenol A (Epoxidzahl = 0,585) und 0,1 ml Dimethylbenzylamin gemischt und anschließend auf 120°C aufgeheizt. Die leicht exotherme Reaktion zeigt den sofortigen Beginn der Isocyanuratbildung an. Nach 2 Std. Reaktionszeit ohne externe Heizung wird der Ansatz gekühlt. Dadurch stellt sich eine Innentemperatur von ca. 90°C ein. Dem Ansatz wird eine Probe entnommen. Die Probe besitzt einen NCO-Gehalt von 23 % NCO. Durch Zugabe von 5 ml Stopperlösung (= 15,4 gew.-%ige Lösung von p-Toluolsulfonsäuremethylester in einem Gemisch aus 60 % 2,4′-Diisocyanatodiphenylmethan und 40 % 4,4′-Diisocyanatodiphenylmethan) wird die Reaktion abgebrochen. Anschließend rührt man den Ansatz weitere 30 min bei 120°C. Es entsteht ein bei 20°C flüssiges, klares, gelbes lagerstabiles Harz mit einer Viskosität bei 25°C von 2100 mPas und eine NCO-Gehalt von 21 % (Stufe 1).

Beispiel 2

100 Gew.-Teile des Reaktionsharzes aus Beispiel 1 werden mit 1 Gew.-Teil Dimethylbenzylamin, 1 Gew.-Teil eines Polyetherpolsiloxans (OS 20 Schaumstabilisator, Bayer AG) und 0,2 Gew.-Teilen einer 5 %igen Losung von Phospholinoxid in Tripropylenglykol mit einem Schnellrührer innig vermischt und in eine offene Form gegossen.

Nach 6 min Liegezeit beginnt die Schaumbildung, der Schaum treibt gleichmäßig auf, die Schaumbildung ist nach 12 min beendet. Es entsteht ein fester, klebfreier offenzelliger Hartschaum mit einem Schaumfaktor von 4,1

$$\text{Schaumfaktor:} \quad \frac{\text{Volumen Schaum}}{\text{Volumen Ausgangsmischung}} \quad )$$

(Definition

(Stufe 2).

Beispiel 3

100 Gew.-Teile des Reaktionsharzes aus Beispiel 1 werden mit 1 Gew.-Teil Dimethylbenzylamin, 1 Gew.-Teil Polyetherpolysiloxan (OS 20) und 0,24 Gew.-Teilen Wasser 3 min mit dem Schnellrührer innig vermischt und in eine Form gegossen. Die Treibreaktion setzt sofort ein und ist nach 3 min beendet. Der Schaum ist nach weiteren 3 min klebfrei und wird der Form entnommen. Der Schaum ist feinteilig und gleichmäßig. Er besitzt ein Schaumfaktor von 4,2 (Stufe 2).

Beispiel 4

Man arbeitet wie im Beispiel 3 beschrieben nur mit dem Unterschied, daß vor der Wasserzugabe dem Reaktionsharz noch 100 Gew.-Teile Glasmehl zugesetzt werden. Auch hier setzt nach Wasserzugabe und inniger Mischung die Treibreaktion sofort ein. Sie ist nach 3 min beendet, nach weiteren 4 min ist der Schaum klebfrei. Der feinteilige, gleichmäßige Hartschaum besitzt einen Schaumfaktor von 3,5 (Stufe 2).

Beispiel 5

200 Gew.-Teile des Reaktionsharzes aus Beispiel 1 werden mit 2 Gew.-Teilen eines Katalysatorgemisches A und 1 Gew.-Teil Polyetherpolysiloxan innig vermischt und bei Raumtemperatur stehen gelassen. Nachdem die Schaumkörper aufgetrieben und geliert waren (insgesamt 9 min) wurde der Schaumfaktor und die Rohdichte ermittelt (Stufe 2).

Abbindezeit: 9 min
Schaumfaktor: 4,2
Rohdichte: 142 (kg/m$^3$)

Aus dem Rohschaumstoff wurden Platten 50 x 50 x 10 mm geschnitten und diese Plattten im Heizschrank jeweils 4 Std. bei 80°C C/120°C/160°C und 5 Std. bei 250°C getempert. Von diesen Schaumstoffproben wurden anschließend Druckfestigkeiten bei dem angegebenen Temperaturen gemessen.

| °C | Druckfestigkeit [N/mm$^2$] |
|---|---|
| 23 | 0,90 |
| 50 | 0,82 |
| 100 | 0,81 |
| 150 | 0,91 |
| 200 | 0,85 |

Diese Ergebnisse zeigen, das auf diese Weise hochtemperaturstabile Schaumstoffe erhalten werden.

Katalysatorgemisch A: Gemisch aus gleichen Gew.-Teilen Pentamethyl-diethylentriamin, N-Methyl-N'-dimethylaminoethyl-piperazin, N,N-Diethyl-ethanolamin und Silamorpholin, (wirkt gleichzeitig als Treibmittel T).

**Patentansprüche**

1. Verfahren zur Herstellung hochtemperaturbeständiger Schaumstoffe durch Umsetzung von
   a) mindestens einem organischen Polyisocyanat mit
   b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht, in Gegenwart
   c) eines tertiären Amins als Katalysator zu einem Oxazolidinon- und/oder Isocyanuratgruppen aufweisenden Zwischenprodukt, und Abbruch der Reaktion bei einer Umsetzung von maximal 60 % der im Ausgangsgemisch vorliegenden Isocyanatgruppen durch Zugabe einer der Aminmenge c) mindestens äquivalenten Menge
   d) eines alkylierend wirkenden Sulfonsäurealkylesters, von Methyljodid oder von Dimethylsulfat, so daß ein intermediärer stabiler B-Zustand des Viskositätsbereichs von 1.500 bis 20.000 mPa.s bei 25° C erhalten wird, und
   e) gegebenenfalls in Gegenwart weiterer an sich bekannter Hilfs- und Zusatzstoffe
   dadurch gekennzeichnet, daß dieser B-Zustand durch Zugabe von chemischen und/oder physikalischen Treibmitteln T) und einem die Isocyanat/Epoxid Reaktion beschleunigenden Katalysator f) ohne Wärmezufuhr unter gleichzeitigem Aufschäumen in den endgültigen geschäumten Zustand überführt wird.

2. Verfahren nach Anspruch 1, dadurch gekennzeichnet, daß man als chemische Treibmittel T) Wasser und/oder Phospholinoxid, als physikalische Treibmittel leicht siedende inerte organische Flüssigkeiten und als Katalysatoren f) tert.-Amine verwendet.

3. Verfahren nach Anspruch 1 und 2, dadurch gekennzeichnet, daß man als Hilfs- und Zusatzstoffe e) Schaumstoffstabilisatoren, Trennmittel und Farbstoffe in einer maximalen Menge von bis zu 10 Gew.-%, bezogen auf das Gesamtgewicht der Komponenten a) und b), und anorganische und/oder organische Füllstoffe, olefinisch ungesättigte Verbindungen, insbesondere Styrol und/oder Maleinimidderivate, und/oder mindestens zwei alkoholische Hydroxylgruppen aufweisende organische Verbindungen des Molekulargewichtsbereichs 62 bis 8.000 in einer maximalen Menge von bis zu 100 Gew.-%, bezogen auf das Gesamtgewicht der Komponenten a) und b), verwendet.

4. Verfahren gemäß Anspruch 1 - 3, dadurch gekennzeichnet, daß nach dem Aufschäumen und Überführung in den endgültigen geschäumten Zustand eine nachträgliche Temperaturbehandlung zwischen 120 und 250° C vorgenommen wird.

5. Verfahren gemäß Anspruch 1, 2 und 4, dadurch gekennzeichnet, daß
   a) mindestens ein organisches Polyisocyanat mit

EP 0 432 444 B1

b) mindestens einer mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht, in Gegenwart

c) eines tertiären Amins als Katalysator c) in einer Menge von 0,01 bis 2, vorzugsweise 0,01 bis 0,1 Gew.-%, bezogen auf das Gesamtgewicht der Komponenten a) und b), zu einem Oxazolidinon- und/oder Isocyanuratgruppen aufweisenden Zwischenprodukt umgesetzt, und der Abbruch der Reaktion bei einer Umsetzung von maximal 60 % der im Ausgangsgemisch vorliegenden Isocyanatgruppen durch Zugabe einer der Aminmenge c) mindestens äquivalente Menge

d) eines alkylierend wirkenden Sulfonsäurealkylesters, von Methyljodid oder von Dimethylsulfat durchgeführt wird, so daß ein intermediärer stabiler B-Zustand des Viskositätsbereichs von 1.500 bis 20.000 mPa.s bei 25° C erhalten wird,

wobei dieser B-Zustand durch Zugabe von chemischen und/oder physikalischen Treibmitteln T) und einem die Isocyanat/Epoxid Reaktion beschleunigenden Katalysator f) ohne Wärmezufuhr unter gleichzeitigem Aufschäumen in den endgültigen geschäumten Zustand überführt wird.

## Claims

1. A process for the production of high-temperature-resistant foams by reaction of

   a) at least one organic polyisocyanate with

   b) at least one organic compound containing at least two epoxide groups in a quantity corresponding to an equivalent ratio of isocyanate groups to epoxide groups of 1.2:1 to 500:1 in the presence of

   c) a tertiary amine as catalyst to form an intermediate product containing oxazolidinone and/or isocyanurate groups and termination of the reaction at a conversion of at most 60% of the isocyanate groups present in the starting mixture by addition of a quantity at least equivalent to the quantity of amine c) of

   d) an alkylating sulfonic acid alkyl ester of methyl iodide or dimethyl sulfate so that an intermediate stable B-stage with a viscosity in the range from 1,500 to 20,000 mPa.s at 25° C is obtained and

   e) optionally in the presence of other auxiliaries and additives known per se,

   characterized in that the B-stage is converted with foaming into the final foamed state in the absence of heat by addition of chemical and/or physical blowing agents T) and a catalyst f) which accelerates the isocyanate/epoxide reaction.

2. A process as claimed in claim 1, characterized in that water and/or phospholine oxide is/are used as chemical blowing agent(s) while low-boiling inert organic liquids are used as the physical blowing agent and tert. amines are used as the catalysts f).

3. A process as claimed in claims 1 and 2, characterized in that foam stabilizers, release agents and dyes in a maximum quantity of up to 10% by weight, based on the total weight of components a) and b), and inorganic and/or organic fillers, olefinically unsaturated compounds, more particularly styrene and/or maleic imide derivatives, and/or organic compounds containing at least two alcoholic hydroxyl groups and having a molecular weight of 62 to 8,000 in a maximum quantity of up to 100% by weight, based on the total weight of components a) and b), are used as the auxiliaries and additives e).

4. A process as claimed in claims 1 to 3, characterized in that a heat treatment is carried out at 120 to 250° C after foaming and conversion into the final foamed state.

5. A process as claimed in claims 1, 2 and 4, characterized in that

   a) at least one organic polyisocyanate is reacted with

   b) at least one organic compound containing at least two epoxide groups in a quantity corresponding to an equivalent ratio of isocyanate groups to epoxide groups of 1.2:1 to 500:1 in the presence of

   c) a tertiary amine as catalyst c) in a quantity of 0.01 to 2% by weight and preferably 0.01 to 0.1% by weight, based on the total weight of components a) and b), to form an intermediate product containing oxazolidinone and/or isocyanurate groups and termination of the reaction at a conversion of at most 60% of the isocyanate groups present in the starting mixture is carried out by addition of a quantity at least equivalent to the quantity of amine c) of

   d) an alkylating sulfonic acid alkyl ester of methyl iodide or dimethyl sulfate so that an intermediate stable B-stage with a viscosity in the range from 1,500 to 20,000 mPa.s at 25° C is obtained,

   the B-stage being converted with foaming into the final foamed state in the absence of heat by addition

EP 0 432 444 B1

of chemical and/or physical blowing agents T) and a catalyst f) which accelerates the isocyanate/epoxide reaction.

**Revendications**

1.  Procédé de préparation de mous stables aux températures élevées par réaction de :
    a) au moins un polyisocyanate organique avec
    b) au moins un composé organique contenant au moins deux groupes époxyde, en quantité correspondant à un rapport de 1,2:1 à 500:1 entre les équivalents de groupes isocyanates et les équivalents de groupes époxyde, en présence de
    c) une amine tertiaire qui sert de catalyseur, la réaction donnant un produit intermédiaire qui contient des groupes oxazolidone et/ou isocyanurate, et cette réaction étant interrompue à un taux de conversion de 60 % au maximum des groupes isocyanate présents dans le mélange initial par addition d'une quantité au moins équivalente à la quantité d'amine c)
    d) d'un ester alkylique d'acide sulfonique servant de réactif alkylant, d'iodure de méthyle ou de sulfate de diméthyle, ce qui donne un produit dans un état intermédiaire stable B à une viscosité de 1 500 à 20 000 mPa.s à 25°C, et
    e) le cas échéant en présence d'autres produits auxiliaires et additifs connus en soi,
    caractérisé en ce que l'on fait passer de cet état B à l'état final de mousse par addition d'agents porogènes chimiques et/ou physiques T et d'un catalyseur f) accélérant la réaction isocyanate/époxyde, sans apport de chaleur, avec gonflement simultané en mousse.

2.  Procédé selon la revendication 1, caractérisé en ce que l'on utilise en tant qu'agents porogènes chimiques T l'eau et/ou l'oxyde de pholine, en tant qu'agents porogènes physiques des liquides organiques volatils inertes, et en tant que catalyseurs f) des amines tertiaires.

3.  Procédé selon les revendications 1 et 2, caractérisé en ce que l'on utilise en tant que produits auxiliaires et additifs e) des stabilisants des mousses, des agents de démoulage et des colorants en quantité maximale allant jusqu'à 10 % du poids total des composants a) et b), et des matières de charge minérales et/ou organiques, des composés à insaturation oléfinique, en particulier du styrène et/ou des dérivés de maléimides, et/ou des composés organiques contenant au moins deux groupes hydroxy alcooliques de poids moléculaire 62 à 8 000, en quantité maximale allant jusqu'à 100 % du poids total des composants a) et b).

4.  Procédé selon les revendications 1 à 3, caractérisé en ce que, après le gonflement en mousse et le passage à l'état final de mousse, on applique un traitement en température complémentaire entre 120 et 250°C.

5.  Procédé selon les revendications 1, 2 et 4, caractérisé en ce que l'on fait réagir
    a) au moins un polyisocyanate organique avec
    b) au moins un composé organique contenant au moins deux groupes époxyde en quantité correspondant à un rapport de 1,2:1 à 500:1 entre les équivalents de groupes isocyanate et les équivalents de groupes époxyde, en présence de
    c) une amine tertiaire servant de catalyseur c), en quantité de 0,01 à 2 %, de préférence de 0,01 à 0,1 % en poids, par rapport au poids total des composés a) et b), la réaction donnant un produit intermédiaire qui contient des groupes oxazolidone et/ou des groupes isocyanurate et étant interrompue à un taux de conversion de 60 % au maximum des groupes isocyanate présents dans le mélange initial par addition d'une quantité au moins équivalente à la quantité d'amine c)
    d) d'un ester alkylique d'acide sulfonique servant de réactif alkylant, d'iodure de méthyle ou de sulfate de diméthyle, ce qui donne un produit intermédiaire à l'état stable B, à une viscosité de 1 500 à 20 000 mPa.s à 25°C,
    le produit à l'état B étant converti en l'état final de mousse par addition d'agents porogènes chimiques et/ou physiques T et d'un catalyseur f) accélérant la réaction isocyanate/époxyde, sans apport de chaleur, avec gonflement simultané en mousse.